# EUROPÄISCHE PATENTSCHRIFT

(11) **EP 3 418 160 B1**
(45) Veröffentlichungstag und Bekanntmachung des Hinweises auf die Patenterteilung: **10.06.2020**
(21) Anmeldenummer: 18174521.7
(22) Anmeldetag: 28.05.2018
(51) Int. Cl.: B62D 15/02

(54) **AUSPARKEN VON EINEM BORDSTEINNIVEAU**
MOVING OUT OF A PARKING SPACE AT KERB LEVEL
STATIONNEMENT À PARTIR D'UN NIVEAU DE BORDURE DE TROTTOIR

(30) Priorität: 31.05.2017 DE 102017111882
(43) Veröffentlichungstag der Anmeldung: 26.12.2018
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)
(74) Vertreter: Pothmann, Karsten

(56) Entgegenhaltungen:
- EP-A1- 2 327 574
- EP-A2- 2 689 990
- DE-A1-102008 017 030
- DE-A1-102008 025 219

## Beschreibung

Die vorliegende Erfindung betrifft ein Verfahren zum Ausparken eines Fahrzeugs auf einem an einem Bordstein gegenüber einem aktuellen Bodenniveau veränderten Niveau.

Auch betrifft die vorliegende Erfindung ein Fahrassistenzsystem zur Durchführung des obigen Verfahrens.

Des Weiteren betrifft die vorliegende Erfindung ein Fahrzeug mit einem solchen Fahrassistenzsystem.

Assistiertes Parken ist in aktuellen Fahrzeugen ein wichtiges Thema. Verschiedenartige Fahrassistenzsysteme sind bekannt, die einem Fahrer eines Fahrzeugs Unterstützung beim Einparken und auch beim Ausparken bereitstellen. Solche Fahrassistenzsysteme reichen von Systemen zur Bestimmung eines Abstands zu einem Hindernis über Systeme zur automatischen Erkennung eines Parkplatzes und Systeme zur automatischen Berechnung und Anzeige einer Route für einen Parkvorgang bis hin zu vollautomatischen Systemen, die selbständig eine Parklücke erkennen und das Fahrzeug autonom in der Parklücke parken. Entsprechendes gilt analog für das Ausparken, welches ebenfalls autonom von einem Fahrassistenzsystem durchgeführt werden kann.

Solche Fahrassistenzsysteme sind bereits weit verbreitet im Einsatz und werden von vielen Fahrzeugführern als Erleichterung angesehen, weil das Ein- und Ausparken oft als schwierig empfunden wird, und die Fahrassistenzsysteme bereits mit einer großen Zuverlässigkeit funktionieren.

Allerdings gibt es beispielsweise beim Parken an einem Bordstein oder in ähnlichen Situationen, bei denen zwischen einem Straßenniveau und dem Niveau einer Parklücke ein Unterschied besteht, noch Verbesserungsbedarf.

Insbesondere können Probleme auftreten, wenn ein Fahrzeug vollständig auf einem Bordstein geparkt ist. Dies bedeutet, dass das Fahrzeug vollständig auf einem Niveau einer Oberkante des Bordsteins steht. Insbesondere ein Überschreiten einer Kante eines Bordsteins im Grenzbereich zwischen den beiden Niveaus ist dabei kritisch, da dabei Grenzbedingungen auftreten können, durch welche das Fahrzeug schwer zu kontrollieren sind. Beim Herunterfahren von dem erhöhten Bordstein kann das Fahrzeug zusätzliche kinetische Energie erhalten und in einer nicht kontrollierten Weise beschleunigt werden. Dadurch besteht eine erhöhte Gefahr einer Kollision mit einem Hindernis in Bewegungsrichtung des Fahrzeugs. Die weitere Bewegung des Fahrzeugs ist durch die zusätzliche kinetische Energie schwer zu kontrollieren.

EP 2 327 574 A1 beschreibt ein Verfahren zur Unterstützung eines Fahrers eines Kraftfahrzeugs bei einem Fahrmanöver zur Überwindung eines Hindernisses mit einer geringen Geschwindigkeit, wobei das Hindernis eine Höhe aufweist, die von dem Fahrzeug überwunden werden kann.

Ausgehend von dem oben genannten Stand der Technik liegt der Erfindung somit die Aufgabe zugrunde, ein Verfahren zum Ausparken eines Fahrzeugs auf einem an einem Bordstein gegenüber einem aktuellen Bodenniveau veränderten Niveau, ein Fahrassistenzsystem zur Durchführung des obigen Verfahrens, und ein Fahrzeug mit einem solchen Fahrassistenzsystem anzugeben, die ein zuverlässiges und sicheres Ausparken eines Fahrzeugs auf einem an einem Bordstein gegenüber einem aktuellen Bodenniveau veränderten Niveau ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum Ausparken eines Fahrzeugs von einem an einem Bordstein gegenüber einem aktuellen Bodenniveau erhöhten Niveau angegeben. Das Verfahren umfasst die Schritte Bestimmen einer Trajektorie zum Ausparken des Fahrzeugs, Bewegen des Fahrzeugs entlang der Trajektorie, Erfassen einer Bordsteinkante beim Erreichen der Bordsteinkante mit einem ersten Rad in einer durch die Trajektorie definierten Bewegungsrichtung des Fahrzeugs, und beim Erfassen des Erreichens der Bordsteinkante mit dem ersten Rad, Abbremsen des Fahrzeugs zum Abschließen des Ausparkvorgangs. Dabei umfasst der Schritt des Erfassens einer Bordsteinkante beim Erreichen der Bordsteinkante mit einem ersten Rad in einer durch die Trajektorie definierten Bewegungsrichtung des Fahrzeugs ein Erfassen des Durchdrehens des ersten Rades an der Bordsteinkante.

Erfindungsgemäß ist außerdem ein Fahrassistenzsystem zur Durchführung des obigen Verfahrens angegeben.

Weiter ist erfindungsgemäß ein Fahrzeug mit einem solchen Fahrassistenzsystem angegeben

Grundidee der vorliegenden Erfindung ist es also, ausgehend von einer erkannten Bordsteinkannte einen üblichen Ausparkvorgang dahingehend zu kontrollieren, dass das Fahrzeug einen sicheren Ausparkvorgang mit einer geringeren Geschwindigkeit durchführen kann. Entsprechend kann das Fahrzeug abgebremst werden, wodurch eine Gefahr für eine Kollision mit einem Hindernis reduziert wird, da das Fahrzeug weniger anfällig für unkontrollierte Fahrsituationen ist, wie sie an Bordsteinkannten auftreten können. Außerdem können beim Überfahren von Bordsteinkanten mit einer zu hohen Geschwindigkeiten Beschädigungen am Unterboden des Fahrzeugs entstehen, die durch eine Reduktion der Geschwindigkeit des Fahrzeugs ebenfalls verhindert oder zumindest abgeschwächt werden können.

Der Bordstein zeichnet sich mit einem Niveauunterschied oder einem Höhenunterschied dahingehend aus, dass der Bordstein gegenüber einem aktuellen Bodenniveau ein erhöhtes Niveau aufweist. Die Höhe kann abhängig von der Art des Bordsteins unterschiedlich sein.

Die Trajektorie gibt eine erforderliche Fahrtstrecke des Fahrzeugs zum Ausparken an. Die Trajektorie kann unidirektional sein, wenn das Fahrzeug in einem Zug ausgeparkt werden kann. Alternativ kann die Trajektorie ein Ausparken mit mehreren Zügen umfassen, wobei das Fahrzeug zumindest einmal seine Fahrtrichtung ändert. Das Fahrzeug wird beim Ausparken entlang der Trajektorie bewegt, um autonom auszuparken.

Beim Ausparken in mehreren Zügen kann es prinzipiell vorkommen, dass ein Rad erneut den Bordstein hinauffahren muss. Ausgehend von der Kenntnis der Lage der Bordsteinkannte kann das Verfahren sinngemäß auch angewendet werden, um mit einem Rad oder mit mehreren Rädern beim Einparken wieder auf den Bordstein hochzufahren.

Ausgehend von der Trajektorie kann bereits ein Rad als erstes Rad vorausgewählt sein. Bei einem üblichen Parkplatz und einer üblichen Trajektorie lässt sich bereits anhand der Trajektorie ein Rad bestimmen, welches im Falle eines auf dem Bordstein geparkten Fahrzeugs voraussichtlich als erstes eine Bordsteinkante erreicht.

Nach dem Überwinden der Bordsteinkante kann wie davor prinzipiell eine beliebige Operation durchgeführt werden, beispielsweise um das Ausparken fortzusetzen.

Das Durchdrehen des Rades wird also als Erreichen bzw. Überschreiten des Bordsteins bzw. einer Bordsteinkante angesehen. Dies ist insoweit zutreffend, da ein entsprechendes Durchdrehen des ersten Rades an der Bordsteinkante zuverlässig auftritt. Ein Durchdrehen des ersten Rades das nicht auf der Überfahrt einer Bordsteinkante basiert, wird zwar fälschlicherweise auch zu einem Abbremsen des Fahrzeugs führen, was aus Sicherheitsaspekten allerdings akzeptabel ist. Das erste Rad ist hier das Rad, welches als erstes die Bordsteinkante erreicht. Ohne besondere Kenntnis in Bezug auf eine Lage der Bordsteinkante relativ zu dem Fahrzeug kann prinzipiell jedes Rad als das erste Rad angesehen werden.

In vorteilhafter Ausgestaltung der Erfindung umfasst der Schritt des Erfassens des Durchdrehens eines ersten Rades in Bewegungsrichtung des Fahrzeugs ein Überwachen von Odometriedaten des Fahrzeugs und ein Erfassen des Durchdrehens des ersten Rades basierend auf den Odometriedaten. Odometriedaten betreffen Bewegungsinformationen wie Lenkwinkel oder Geschwindigkeit des Fahrzeugs, die von dem Fahrzeug selber typischerweise ausgehend von seinen eigenen Sensoren ermittelt werden. Im Falle des Durchdrehens eines Rades ergibt sich ein erkennbarer Sprung oder eine Diskontinuität in den Odometriedaten, was das Durchdrehen des ersten Rades zuverlässig anzeigt.

In vorteilhafter Ausgestaltung der Erfindung umfasst der Schritt des Erfassens des Durchdrehens eines ersten Rades in Bewegungsrichtung des Fahrzeugs ein Überwachen eines einem jeweiligen Rad zugeordneten Durchdrehsignals. Das Durchdrehsignal wird von dem Fahrzeug bzw. einem weiteren Assistenzsystem des Fahrzeugs ausgegeben, um eine andere Art der Steuerung oder eine andere Fahrassistenz bereitzustellen. Im Zuge des erfindungsgemäßen Verfahrens kann ein solches Signal zweitverwertet werden, so dass das erfindungsgemäße Verfahren mit geringem Aufwand und geringen Anforderungen an zusätzliche Hardwarekomponenten durchgeführt werden kann. Vorzugsweise ist das Durchdrehsignal ein Durchdrehsignal eines elektronischen Stabilitätsprogramms, auch als ESP bekannt.

In vorteilhafter Ausgestaltung der Erfindung umfasst der Schritt des Erfassens des Durchdrehens eines ersten Rades in Bewegungsrichtung des Fahrzeugs ein Überwachen von Umdrehungssensorsignalen des ersten Rades. Die Umdrehungssensoren können somit unmittelbar in dem Assistenzsystem ausgewertet werden. Die Umdrehungssensoren können Sensoren sein, die von mehreren Assistenzsystemen gemeinsam genutzt werden, oder Sensoren explizit für das Assistenzsystem der vorliegenden Erfindung. Die Umdrehungssensoren liefern Signale beim Drehen des jeweiligen Rades. Ein Durchdrehen eines Rades wird also dazu führen, dass der entsprechende Sensor Signale in kurzer Abfolge liefert, was als Durchdrehen des Rades erkannt werden kann.

In vorteilhafter Ausgestaltung der Erfindung umfasst der Schritt des Erfassens des Durchdrehens eines ersten Rades in Bewegungsrichtung des Fahrzeugs ein Bestimmen des ersten Rades basierend auf der Trajektorie zum Ausparken des Fahrzeugs. Basierend auf der bestimmten Trajektorie kann also das erste Rad bestimmt werden, welches hier als erstes Rad überwacht werden soll, um ein Ausparken von dem Bordstein zu erfassen. Beim Parken in Reihe sind die Fahrzeuge jeweils hintereinander in einer Reihe beispielsweise neben einer Fahrbahn abgestellt. Unmittelbar neben der Fahrbahn positionierte Räder müssen also prinzipiell zuerst die Bordsteinkante erreichen, und sind daher zu überwachen. Entsprechendes gilt beim Parken quer zur Fahrbahn. Abhängig davon, ob das Fahrzeug vorwärts oder rückwärts eingeparkt ist, können also nur die entsprechenden vorderen bzw. hinteren Räder zuerst die Bordsteinkante erreichen. Basierend auf diesem Wissen kann eine Überwachung der Räder auf ein oder zwei Räder reduziert werden, wodurch das Verfahren nur geringe Ressourcen zur Datenverarbeitung erfordert,

In vorteilhafter Ausgestaltung der Erfindung umfasst der Schritt des Erfassens einer Bordsteinkante beim Erreichen der Bordsteinkante mit einem ersten Rad in einer durch die Trajektorie definierten Bewegungsrichtung des Fahrzeugs ein Bestimmen der Bordsteinkante basierend auf einer erfassten Bordsteinkante bei einem vorhergehenden Einparken auf dem Bordstein. Das Ausparken von dem Bordstein erfordert zwangsläufig, dass das Fahrzeug zuvor dort eingeparkt und abgestellt wurde. Dabei können bereits Informationen über ein Vorhandensein einer Bordsteinkante gesammelt ggf. gespeichert werden, die auch beim Ausparken entsprechend genutzt werden können. Allerdings sind Information über das Vorhandensein eines Bordsteins bzw. einer Bordsteinkannte nicht immer nutzbar, da sie abhängig von einer konkreten Implementierung beim Ausschalten des Fahrzeugs nach dem Einparken verloren gehen können.

In vorteilhafter Ausgestaltung der Erfindung umfasst der Schritt des Abbremsens des Fahrzeugs zum Abschließen des Ausparkvorgangs ein Bestimmen einer Position der Bordsteinkante basierend auf einer Position des ersten Rades an der Bordsteinkante und ein Bestimmen eines Erreichens der Bordsteinkante mit einem weiteren Rad. Somit kann ausgehend von der Position des ersten Rades beim Erreichen der Bordsteinkante bestimmt werden, wann ein weiteres Rad die Bordsteinkante voraussichtlich erreichen wird. Die Bordsteinkante wird dabei basierend auf einer Position des Durchdrehens des ersten Rades erfasst.

In vorteilhafter Ausgestaltung der Erfindung umfasst der Schritt des Bestimmens eines Erreichens der Bordsteinkante mit einem weiteren Rad unter Berücksichtigung von wenigstens einer Information aus einer Trajektorie zum Ausparken des Fahrzeugs, einem Lenkwinkel des Fahrzeugs, einer Umgebungskarte und einer Anordnung der weiteren Räder an dem Fahrzeug bezogen auf das erste Rad. Die verschiedenen Alternativen können genutzt werden, um Positionen der weiteren Räder des Fahrzeugs zu bestimmen bezogen auf die Bordsteinkante, und das Erreichen bzw. überwinden der Bordsteinkante vorherzusagen. Damit kann das Ausparken als solches weiter verbessert werden.

In vorteilhafter Ausgestaltung der Erfindung umfasst der Schritt des Abbremsens des Fahrzeugs zum Abschließen des Ausparkvorgangs ein Abbremsen des Fahrzeugs beim Erreichen der Bordsteinkante mit einem weiteren Rad. Entsprechend kann das Abbremsen jeweils punktgenau erfolgen, wenn ein Rad die Bordsteinkante erreicht, und ein weiteres Durchdrehen eines Rades und damit ein nicht stabiler Zustand des Fahrzeugs zu erwarten ist. Im Übrigen kann das Ausparken zügig durchgeführt werden, wodurch das Verfahren insgesamt sehr effizient ist.

In vorteilhafter Ausgestaltung der Erfindung umfasst das Verfahren einen zusätzlichen Schritt des Speicherns einer Position der Bordsteinkante. Die gespeicherte Position der Bordsteinkannte kann somit jedes Mal beim Parken an derselben Stelle berücksichtigt werden, so dass bereits beim Beginn des Ausparkens das Vorhandensein der Bordsteinkannte berücksichtigt werden kann. Diese Information kann sowohl für das Einparken wie auch für das Ausparken genutzt werden, um unstabile Fahrzustände zu vermeiden. Entsprechendes gilt für ein Ausparken in mehreren Zügen, bei dem ggf. ein Rad wieder auf den Bordstein bewegt werden muss.

Nachfolgend wird die Erfindung unter Bezugnahme auf die anliegende Zeichnung anhand bevorzugter Ausführungsformen näher erläutert.

Es zeigt
- Fig. 1: eine schematische Ansicht eines Fahrzeugs mit einem Fahrassistenzsystem zum Ausparken gemäß einer ersten, bevorzugten Ausführungsform in Draufsicht,
- Fig. 2: eine schematische Ansicht des Fahrzeugs aus Fig. 1 beim Ausparken aus einer Parklücke gemäß der ersten, bevorzugten Ausführungsform in Draufsicht, und
- Fig. 3: ein Ablaufdiagram eines Verfahrens zum Ausparken des Fahrzeugs aus Fig. 1 von einem an einem Bordstein gegenüber einem aktuellen Bodenniveau erhöhten Niveau.

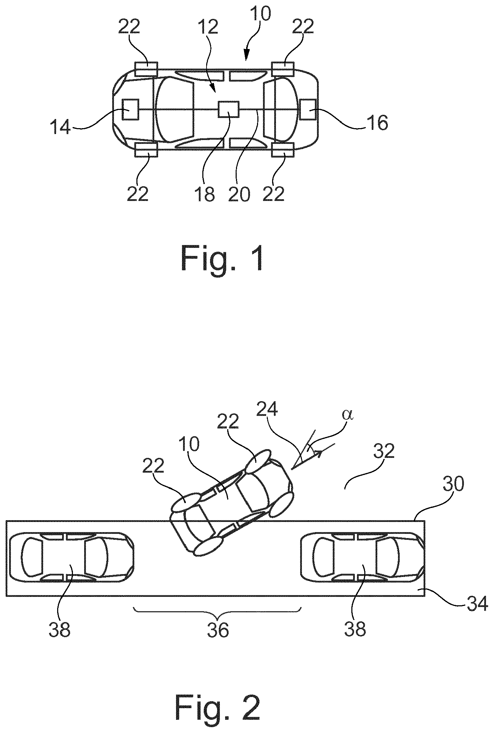

Die Figur 1 zeigt ein Fahrzeug 10 mit einem Fahrassistenzsystem 12 gemäß einer ersten, bevorzugten Ausführungsform.

Das Fahrassistenzsystem 12 umfasst eine Frontkamera 14 und eine Rückkamera 16, die Videoinformationen beispielsweise für autonomes Fahren bereitstellen. Weiter umfasst das Fahrassistenzsystem 12 eine Steuereinrichtung 18, die mit der Frontkamera 14 und der Rückkamera 16 über einen Datenbus 20 verbunden ist.

Das Fahrzeug umfasst vier Räder 22, die mit nicht explizit dargestellten Umdrehungssensoren ausgeführt sind. Die Umdrehungssensoren sind ebenfalls über den Datenbus 20 mit der Steuereinrichtung 18 verbunden. Die Umdrehungssensoren liefern beim Drehen des jeweiligen Rades 22 Umdrehungssensorsignale, auch "wheel tics" genannt, wobei ein "tic" als Sensorsignal jeweils eine Drehung des Rades 22 um einen bestimmten Winkel angibt.

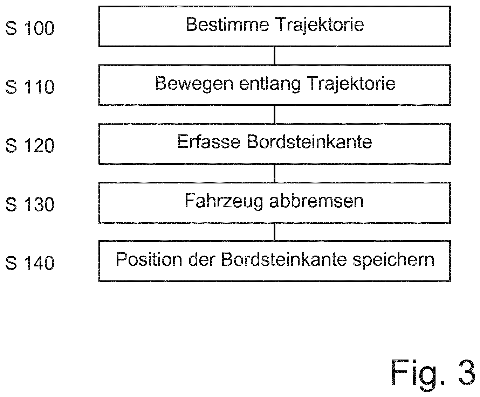

Das Fahrassistenzsystem 12 ist zur Durchführung des nachstehend beschriebenen Verfahrens zum Ausparken des Fahrzeugs 10 von einem an einer Bordsteinkante 30 gegenüber einem aktuellen Bodenniveau 32 einer Straße erhöhten Niveau 34 ausgeführt. Das Fahrzeug 10 wird dabei aus einer Parklücke 36, die hier zwischen zwei geparkten Fahrzeugen 38 in Reihe ausgeführt ist, gefahren. Das Verfahren wird nachstehend unter Bezug auf das Ablaufdiagramm in Fig. 3 zusammen mit der Darstellung in Fig. 2 beschrieben.

Das Verfahren beginnt in Schritt S100 mit einem Bestimmen einer Trajektorie zum Ausparken des Fahrzeugs 10 aus der Parklücke 36. Die Trajektorie wird in diesem Ausführungsbeispiel basierend auf einer Umgebungskarte bestimmt, die unter Verwendung der Frontkamera 14 und der Rückkamera 16 erstellt wird. Die Trajektorie gibt eine erforderliche Bewegung des Fahrzeugs 10 zum Ausparken an. Die Trajektorie kann unidirektional sein, um das Fahrzeug 10 in einem Zug auszuparken. Alternativ kann die Trajektorie ein Ausparken mit mehreren Zügen umfassen, wobei das Fahrzeug 10 zumindest einmal seine Bewegungsrichtung 24 ändert.

Gemäß Schritt S110 wird das Fahrzeug 10 entlang der Trajektorie in Bewegungsrichtung 24 bewegt. Es erfolgt ein autonomes Ausparken des Fahrzeugs 10 aus der Parklücke 36 durch das Fahrassistenzsystem 12.

In Schritt S120 wird die Bordsteinkante 30 beim Erreichen der Bordsteinkante 30 mit einem ersten der Räder 22 in einer durch die Trajektorie definierten Bewegungsrichtung 24 des Fahrzeugs 10 erfasst. Ausgehend von der hier bestimmten Trajektorie ist als erstes Rad 22 ein Rad 22 links vorne an dem Fahrzeug 10 vorausgewählt, da dieses Rad 22 beim Ausparken als erstes die Bordsteinkante 30 erreicht und passiert.

Im Detail wird ein Durchdrehen des ersten Rades 22 an der Bordsteinkante 30 erfasst. Dazu werden Odometriedaten des Fahrzeugs 10 betreffend Bewegungsinformationen wie Lenkwinkel α oder Geschwindigkeit des Fahrzeugs 10 von dem Fahrzeug 10 selber ausgehend von seinen eigenen Sensoren ermittelt. Das Durchdrehen des ersten Rades 22 wird durch ein Überwachen der Odometriedaten des Fahrzeugs 10 erfasst, wobei sich im Falle des Durchdrehens des ersten Rades 22 ein erkennbarer Sprung oder eine Diskontinuität in den Odometriedaten ergibt, wodurch das Durchdrehen des ersten Rades 22 bestimmen wird.

In einer alternativen Ausführungsform umfasst das Erfassen des Durchdrehens des ersten Rades 22 in Bewegungsrichtung 24 des Fahrzeugs 10 ein Überwachen eines einem jeweiligen Rad 22 zugeordneten Durchdrehsignals. Das Durchdrehsignal wird von dem Fahrzeug 10 bzw. einem weiteren Assistenzsystem des Fahrzeugs 10 ausgegeben, um eine Steuerung eines elektronischen Stabilitätsprogramms ESP durchzuführen. Das Durchdrehsignal wird hier somit zweitverwertet.

In einer weiter alternativen Ausführungsform umfasst das Erfassen des Durchdrehens des ersten Rades 22 in Bewegungsrichtung 24 des Fahrzeugs 10 ein Überwachen der Umdrehungssensorsignale des ersten Rades 22. Der Umdrehungssensor des ersten Rades 22 wird somit unmittelbar in dem Assistenzsystem 12 ausgewertet. Ein Durchdrehen des ersten Rades 22 führt dazu, dass der entsprechende Umdrehungssensor Signale in kurzer Abfolge liefert, was als Durchdrehen des Rades 22 erkannt wird.

In Schritt S130 wird beim Erfassen des Erreichens der Bordsteinkante 30 mit dem ersten Rad 22 das Fahrzeug 10 abgebremst, um den Ausparkvorgang abzuschließen.

Das Abbremsen des Fahrzeugs 10 zum Abschließen des Ausparkvorgangs umfasst ein Bestimmen einer Position der Bordsteinkante 30 basierend auf einer Position des ersten Rades 22 an der Bordsteinkante 30. Darauf basierend wird ein Erreichen der Bordsteinkante 30 mit einem weiteren Rad 22 bestimmt. Es wird also ausgehend von der Position des ersten Rades 22 beim Erreichen der Bordsteinkante 30 bestimmt, wann ein weiteres Rad 22 die Bordsteinkante 30 voraussichtlich erreicht. Die Bordsteinkante 30 wird dabei basierend auf einer Position des Durchdrehens des ersten Rades 22 erfasst.

Dabei wird wenigstens eine Information aus einer Trajektorie zum Ausparken des Fahrzeugs 10, einem Lenkwinkel α des Fahrzeugs 10, einer Umgebungskarte und einer Anordnung der weiteren Räder 22 an dem Fahrzeug 10 bezogen auf das erste Rad 22, angegeben.

Ausgehend davon erfolgt das Abbremsen des Fahrzeugs 10 derart, dass das Fahrzeug 10 lediglich beim Erreichen der Bordsteinkante 30 mit einem weiteren Rad 22 punktgenau abgebremst wird, wenn ein Rad 22 die Bordsteinkante 30 erreicht.

Beim Ausparken in mehreren Zügen kann es prinzipiell vorkommen, dass ein Rad 22 erneut an der Bordsteinkante 24 den Bordstein hinauffahren muss. Ausgehend von der Kenntnis der Lage der Bordsteinkannte 30 wird das Verfahren sinngemäß auch angewendet, um auf den Bordstein beim Einparken hochzufahren.

In einer alternativen Ausführungsform wird bei einem vorherigen Einparken des Fahrzeugs 10 die Bordsteinkante 30 erfasst und gespeichert. Entsprechend wird die Information verwendet, um beim Ausparken die Bordsteinkante 30 exakt zu bestimmen.

In Schritt S140 wird eine Position der Bordsteinkante 30 gespeichert. Die Position der Bordsteinkante 30 wird in diesem Ausführungsbeispiel mit Hilfe von Satellitennavigationssignalen bestimmt, beispielsweise nach dem GPS-Standard.

Die gespeicherte Information kann sowohl für das Einparken wie auch für das Ausparken an der Position genutzt werden, um unstabile Fahrzustände zu vermeiden. Entsprechendes gilt für ein Ausparken in mehreren Zügen, bei dem ggf. ein Rad 22 wieder auf den Bordstein bewegt werden muss.

### Bezugszeichenliste

- 10: Fahrzeug
- 12: Fahrassistenzsystem
- 14: Frontkamera
- 16: Rückkamera
- 18: Steuereinrichtung
- 20: Datenbus
- 22: Rad
- 24: Bewegungsrichtung
- 30: Bordsteinkante
- 32: Straße
- 34: erhöhtes Niveau
- 36: Parklücke
- 38: geparktes Fahrzeug

- α: Lenkwinkel

## Patentansprüche

1. Verfahren zum Ausparken eines Fahrzeugs (10) von einem an einem Bordstein gegenüber einem aktuellen Bodenniveau (32) erhöhten Niveau (34), umfassend die Schritte
Bestimmen einer Trajektorie zum Ausparken des Fahrzeugs (10),
Bewegen des Fahrzeugs (10) entlang der Trajektorie,
Erfassen einer Bordsteinkante (30) beim Erreichen der Bordsteinkante (30) mit einem ersten Rad (22) in einer durch die Trajektorie definierten Bewegungsrichtung (24) des Fahrzeugs (10), und
beim Erfassen des Erreichens der Bordsteinkante (10) mit dem ersten Rad (22), Abbremsen des Fahrzeugs (10) zum Abschließen des Ausparkvorgang,
**dadurch gekennzeichnet, dass**
der Schritt des Erfassens einer Bordsteinkante (30) beim Erreichen der Bordsteinkante (30) mit einem ersten Rad (22) in einer durch die Trajektorie definierten Bewegungsrichtung (24) des Fahrzeugs (10) ein Erfassen des Durchdrehens des ersten Rades (22) an der Bordsteinkante (30) umfasst.

2. Verfahren nach Anspruch 1, **dadurch gekennzeichnet, dass**
der Schritt des Erfassens des Durchdrehens eines ersten Rades (22) in Bewegungsrichtung (24) des Fahrzeugs (10) ein Überwachen von Odometriedaten des Fahrzeugs (10) und ein Erfassen des Durchdrehens des ersten Rades (22) basierend auf den Odometriedaten umfasst.

3. Verfahren nach einem der vorhergehenden Ansprüche 1 oder 2, **dadurch gekennzeichnet, dass**
der Schritt des Erfassens des Durchdrehens eines ersten Rades (22) in Bewegungsrichtung (24) des Fahrzeugs (10) ein Überwachen eines einem jeweiligen Rad (22) zugeordneten Durchdrehsignals umfasst.

4. Verfahren nach einem der vorhergehenden Ansprüche 1 bis 3, **dadurch gekennzeichnet, dass**
der Schritt des Erfassens des Durchdrehens eines ersten Rades (22) in Bewegungsrichtung (24) des Fahrzeugs (10) ein Überwachen von Umdrehungssensorsignalen des ersten Rades (22) umfasst.

5. Verfahren nach einem der vorhergehenden Ansprüche 1 bis 4, **dadurch gekennzeichnet, dass**
der Schritt des Erfassens des Durchdrehens eines ersten Rades (22) in Bewegungsrichtung (24) des Fahrzeugs (10) ein Bestimmen des ersten Rades (22) basierend auf der Trajektorie zum Ausparken des Fahrzeugs (10) umfasst.

6. Verfahren nach einem der vorhergehenden Ansprüche, **dadurch gekennzeichnet, dass**
der Schritt des Erfassens einer Bordsteinkante (30) beim Erreichen der Bordsteinkante (30) mit einem ersten Rad (22) in einer durch die Trajektorie definierten Bewegungsrichtung (24) des Fahrzeugs (10) ein Bestimmen der Bordsteinkante (30) basierend auf einer erfassten Bordsteinkante (30) bei einem vorhergehenden Einparken auf dem Bordstein umfasst.

7. Verfahren nach einem der vorhergehenden Ansprüche, **dadurch gekennzeichnet, dass**
der Schritt des Abbremsens des Fahrzeugs (10) zum Abschließen des Ausparkvorgangs ein Bestimmen einer Position der Bordsteinkante (30) basierend auf einer Position des ersten Rades (22) an der Bordsteinkante (30) und ein Bestimmen eines Erreichens der Bordsteinkante (30) mit einem weiteren Rad (22) umfasst.

8. Verfahren nach Anspruch 7, **dadurch gekennzeichnet, dass**
der Schritt des Bestimmens eines Erreichens der Bordsteinkante (30) mit einem weiteren Rad (22) unter Berücksichtigung von wenigstens einer Information aus einer Trajektorie zum Ausparken des Fahrzeugs (10), einem Lenkwinkel (α) des Fahrzeugs (10), einer Umgebungskarte und einer Anordnung der weiteren Räder (22) an dem Fahrzeug (10) bezogen auf das erste Rad (22) umfasst.

9. Verfahren nach einem der vorhergehenden Ansprüche 7 oder 8, **dadurch gekennzeichnet, dass**
der Schritt des Abbremsens des Fahrzeugs (10) zum Abschließen des Ausparkvorgangs ein Abbremsen des Fahrzeugs (10) beim Erreichen der Bordsteinkante (30) mit einem weiteren Rad (22) umfasst.

10. Verfahren nach einem der vorhergehenden Ansprüche, **dadurch gekennzeichnet, dass**
das Verfahren einen zusätzlichen Schritt des Speicherns einer Position der Bordsteinkante (30) umfasst.

11. Fahrassistenzsystem (12) zur Durchführung des Verfahrens nach einem der vorhergehenden Ansprüche 1 bis 10.

12. Fahrzeug (10) mit einem Fahrassistenzsystem (12) nach dem vorhergehenden Anspruch 11.

## Claims

1. Method for moving a vehicle (10) out of a parking space at a level (34) which is raised at a kerb compared to a current ground level (32), comprising the steps:
determining a trajectory for moving the vehicle (10) out of a parking space,
moving the vehicle (10) along the trajectory,
detecting a kerb edge (30) when the kerb edge (30) is reached by a first wheel (22) in a direction of movement (24) of the vehicle (10) which is defined by the trajectory, and
when it is detected that the kerb edge (10) has been reached with the first wheel (22),
braking the vehicle (10) in order to conclude the process of moving out of a parking space,
**characterized in that**
the step of detecting a kerb edge (30) when the kerb edge (30) is reached with a first wheel (22) in a direction of movement (24) of the vehicle (10) which is defined by the trajectory comprises detecting the spinning of the first wheel (22) at the kerb edge (30).

2. Method according to Claim 1, **characterized in that** the step of detecting the spinning of a first wheel (22) in the direction of movement (24) of the vehicle (10) comprises monitoring odometry data of the vehicle (10) and detecting the spinning of the first wheel (22) on the basis of the odometry data.

3. Method according to one of the preceding Claims 1 and 2, **characterized in that**
the step of detecting the spinning of a first wheel (22) in the direction of movement (24) of the vehicle (10) comprises monitoring a spinning signal which is assigned to a respective wheel (22) .

4. Method according to one of the preceding Claims 1 to 3, **characterized in that**
the step of detecting the spinning of a first wheel (22) in the direction of movement (24) of the vehicle (10) comprises monitoring rotational sensor signals of the first wheel (22).

5. Method according to one of the preceding Claims 1 to 4, **characterized in that**
the step of detecting the spinning of a first wheel (22) in the direction of movement (24) of the vehicle (10) comprises determining the first wheel (22) on the basis of the trajectory in order to move the vehicle (10) out of the parking space.

6. Method according to one of the preceding claims, **characterized in that**
the step of detecting a kerb edge (30) when the kerb edge (30) is reached with a first wheel (22) in a direction of movement (24) of the vehicle (10) which is defined by the trajectory comprises determining the kerb edge (30) on the basis of a detected kerb edge (30) during a preceding process of parking on the kerb.

7. Method according to one of the preceding claims, **characterized in that**
the step of braking the vehicle (10) in order to conclude the process of moving out of a parking space comprises determining a position of the kerb edge (30) on the basis of a position of the first wheel (22) at the kerb edge (30) and determining that the kerb edge (30) has been reached with a further wheel (22).

8. Method according to Claim 7, **characterized in that** the step of determining that the kerb edge (30) has been reached with a further wheel (22) comprises by taking into account at least one information from a trajectory for moving the vehicle (10) out of a parking space, a steering angle (a) of the vehicle (10), a map of the surroundings and an arrangement of the further wheels (22) on the vehicle (10) with respect to the first wheel (22).

9. Method according to one of the preceding Claims 7 or 8, **characterized in that**
the step of braking the vehicle (10) in order to conclude the parking process comprises braking the vehicle (10) when the kerb edge (30) is reached with a further wheel (22).

10. Method according to one of the preceding claims, **characterized in that**
the method comprises an additional step of storing a position of the kerb edge (30).

11. Driving assistance system (12) for carrying out the method according to one of the preceding Claims 1 to 10.

12. Vehicle (10) having a driving assistance system (12) according to the preceding Claim 11.

## Revendications

1. Procédé de sortie de stationnement d'un véhicule (10) depuis un niveau (34) sur une pierre de bordure qui est surélevé par rapport à un niveau du sol (32) actuel, comprenant les étapes suivantes
détermination d'une trajectoire pour la sortie de stationnement du véhicule (10),
déplacement du véhicule (10) le long de la trajectoire, détection d'une arête de pierre de bordure (30) lorsque l'arête de pierre de bordure (30) est atteinte par une première roue (22) dans un sens de déplacement (24) du véhicule (10) défini par la trajectoire, et
lors de la détection du fait que l'arête de pierre de bordure (30) est atteinte par la première roue (22), freinage du véhicule (10) pour terminer la manœuvre de sortie de stationnement,
**caractérisé en ce que**
l'étape de détection d'une arête de pierre de bordure (30) lorsque l'arête de pierre de bordure (30) est atteinte par une première roue (22) dans un sens de déplacement (24) du véhicule (10) défini par la trajectoire comprend une détection du patinage de la première roue (22) contre l'arête de pierre de bordure (30) .

2. Procédé selon la revendication 1, **caractérisé en ce que** l'étape de détection du patinage d'une première roue (22) dans le sens de déplacement (24) du véhicule (10) comprend une surveillance des données odométriques du véhicule (10) et une détection du patinage de la première roue (22) en se basant sur les données odométriques.

3. Procédé selon l'une des revendications précédentes 1 ou 2, **caractérisé en ce que** l'étape de détection du patinage d'une première roue (22) dans le sens de déplacement (24) du véhicule (10) comprend une surveillance d'un signal de patinage associé à une roue (22) respective.

4. Procédé selon l'une des revendications précédentes 1 à 3, **caractérisé en ce que** l'étape de détection du patinage d'une première roue (22) dans le sens de déplacement (24) du véhicule (10) comprend une surveillance de signaux de capteur de rotation de la première roue (22).

5. Procédé selon l'une des revendications précédentes 1 à 4, **caractérisé en ce que** l'étape de détection du patinage d'une première roue (22) dans le sens de déplacement (24) du véhicule (10) comprend une détermination de la première roue (22) en se basant sur la trajectoire pour la sortie de stationnement du véhicule (10).

6. Procédé selon l'une des revendications précédentes, **caractérisé en ce que** l'étape de détection d'une arête de pierre de bordure (30) lorsque l'arête de pierre de bordure (30) est atteinte par une première roue (22) dans un sens de déplacement (24) du véhicule (10) défini par la trajectoire comprend une détermination de l'arête de pierre de bordure (30) en se basant sur une arête de pierre de bordure (30) détectée lors d'une entrée en stationnement précédente sur la pierre de bordure.

7. Procédé selon l'une des revendications précédentes, **caractérisé en ce que** l'étape de freinage du véhicule (10) pour terminer la manœuvre de sortie de stationnement comprend une détermination d'une position de l'arête de pierre de bordure (30) en se basant sur une position de la première roue (22) contre l'arête de pierre de bordure (30) et une détermination que l'arête de pierre de bordure (30) est atteinte par une roue (22) supplémentaire.

8. Procédé selon la revendication 7, **caractérisé en ce que** l'étape de détermination que l'arête de pierre de bordure (30) est atteinte par une roue (22) supplémentaire comprend en tenant compte d'au moins une information parmi une trajectoire pour la sortie de stationnement du véhicule (10), un angle de braquage (a) du véhicule (10), une carte d'environnement et une disposition de la roue (22) supplémentaire au niveau du véhicule (10) par rapport à la première roue (22).

9. Procédé selon l'une des revendications précédentes 7 ou 8, **caractérisé en ce que** l'étape de freinage du véhicule (10) pour terminer la manœuvre de sortie de stationnement comprend un freinage du véhicule (10) lorsque l'arête de pierre de bordure (30) est atteinte par une roue (22) supplémentaire.

10. Procédé selon l'une des revendications précédentes, **caractérisé en ce que** le procédé comprend une étape supplémentaire de mémorisation d'une position de l'arête de pierre de bordure (30).

11. Système d'assistance au conducteur (12) destiné à mettre en œuvre le procédé selon l'une des revendications précédentes 1 à 10.

12. Véhicule (10) comprenant un système d'assistance au conducteur (12) selon la revendication 11 précédente.
